# EUROPÄISCHE PATENTSCHRIFT

(11) **EP 4 486 584 B1**
(45) Veröffentlichungstag und Bekanntmachung des Hinweises auf die Patenterteilung: **28.01.2026**
(21) Anmeldenummer: 23709164.0
(22) Anmeldetag: 01.03.2023
(51) Int. Cl.: B60H 1/00, B60H 1/14, B60H 1/32

(54) **THERMOMANAGEMENTSYSTEM FÜR EIN FAHRZEUG**
THERMAL MANAGEMENT SYSTEM
SYSTÈME DE GESTION THERMIQUE

(30) Priorität: 02.03.2022 DE 102022202121
(43) Veröffentlichungstag der Anmeldung: 08.01.2025
(73) Patentinhaber: Schaeffler Technologies AG & Co. KG, 91074 Herzogenaurach (DE)
(72) Erfinder: ZHANG, Hong, 80687 München (DE)
(74) Vertreter: Schaeffler Technologies
(86) Internationale Anmeldenummer: PCT/EP2023/055181
(87) Internationale Veröffentlichungsnummer: WO 2023/166057

(56) Entgegenhaltungen:
- EP-A1- 3 689 647
- DE-A1- 102020 112 798

## Beschreibung

Die vorliegende Erfindung betrifft ein Thermomanagementsystem für ein Fahrzeug, insbesondere Kraftfahrzeug, wie etwa ein Elektro-, Hybrid- oder Wasserstofffahrzeug.

Derartige Fahrzeuge weisen einen elektrischen Antriebsmotor, eine Batterie und eine Leistungselektronik wie etwa einen Inverter auf. Hierbei wird mittels eines Thermomanagementsystems, welches einen oder mehrere Kühlkreise zur Kühlung des elektrischen Antriebsmotors, der Batterie und der Leistungselektronik aufweist, sichergestellt, dass die Betriebstemperaturen des elektrischen Antriebsmotors, der Batterie und der Leistungselektronik innerhalb vorgegebener Temperaturfenster liegen, um Schäden und/oder Leistungseinbußen der entsprechenden gekühlten Komponenten zu verhindern.

Die EP 3 689 647 A1 betrifft ein Wärmemanagementsystem für Kraftfahrzeuge und ein Kraftfahrzeug mit diesem System, wobei das Wärmemanagementsystem umfasst: einen ersten Batterieheizkreislauf, der eine von einer Heizung bereitgestellte Wärmequelle nutzt und mittels eines Wärmetauschers einen Wärmetausch zwischen Wasser durchführt, um eine Antriebsbatterie zu erwärmen; einen zweiten Batterieheizkreislauf, der eine von einem Antriebsmotor erzeugte Wärmequelle nutzt und mittels des Wärmetauschers einen Wärmetausch zwischen Wasser durchführt, um die Antriebsbatterie zu erwärmen; einen ersten Batteriekühlkreislauf zum Kühlen der Antriebsbatterie, wenn eine Wassertemperatur an einem Einlass der Antriebsbatterie als kleiner oder gleich einem vorgegebenen Temperaturschwellenwert erfasst wird; und einen zweiten Batteriekühlkreislauf, der, wenn die Wassertemperatur am Einlass der Antriebsbatterie als größer als der vorgegebene Temperaturschwellenwert erfasst wird, ein von einem Kondensator in einem Fahrgastraumkühlkreislauf bereitgestelltes Kühlmittel nutzt, um mittels des Wärmetauschers, der mit dem Fahrgastraumkühlkreislauf in Verbindung steht und mit den Batteriekreisläufen geteilt wird, einen Wärmetausch zwischen Wasser und dem Kühlmittel durchzuführen, um die Antriebsbatterie zu kühlen.

Die DE10 2020 112 798 A1 betrifft ein Elektromotorfahrzeug-Temperatureinstellungssystem aufweisend: einen Klimaanlagenkältemittelkreislauf mit einem Kompressor, der ein Kältemittel komprimiert, einem Klimaanlagenverdampfer, der stromaufwärtsseitig des Kompressors bereitgestellt ist, und einem luftgekühlten Kondensator, der das Kältemittel, das aus dem Kompressor fließt, mit Außenluft kondensiert; einen Batteriekühlkreislauf mit einem Batterieverdampfer und konfiguriert, um Kühlwasser, das eine Hauptbatterie kühlt, fließen zu lassen; einen Elektrokomponentenkühlkreislauf, der separat von dem Batteriekühlkreislauf vorgesehen ist und einen Elektrokomponentenkühler aufweist; eine erste Schalteinheit, die konfiguriert ist zum Durchführen eines Schaltens zwischen einer Verbindung und einer Trennung des Batteriekühlkreislaufs und des Elektrokomponentenkühlkreislaufs; und einen Motorkühlkreislauf, der separat von dem Batteriekühlkreislauf und dem Elektrokomponentenkühlkreislauf bereitgestellt und konfiguriert ist, um das Kühlwasser, das einen Motor kühlt, fließen zu lassen.

Eine Aufgabe einer Ausführung der vorliegenden Erfindung ist es, ein verbessertes Thermomanagementsystem für ein Fahrzeug bereitzustellen.

Diese Aufgabe wird durch ein Thermomanagementsystem für ein Fahrzeug mit den Merkmalen des Anspruchs 1 gelöst. Der Anspruch 12 stellt ein Fahrzeug mit einem solchen Thermomanagementsystem unter Schutz.

Nach einem Aspekt der vorliegenden Erfindung weist ein Thermomanagementsystem für ein Fahrzeug, insbesondere für ein Kraftfahrzeug wie etwa ein Elektro-, Hybrid- oder Wasserstofffahrzeug, auf:
einen Kühlmittelkreislauf mit einer Kühlmittelpumpe zum Fördern eines Kühlmittels, insbesondere Öl, in dem Kühlmittelkreislauf zur Kühlung einer Bremse, insbesondere Lamellenbremse, und/oder einer Komponente, insbesondere eines Rotors, eines elektrischen Antriebsmotors des Fahrzeugs und/oder eines Getriebes, insbesondere Reduktionsgetriebes des Fahrzeugs,
einen Wärmemittelkreislauf mit zumindest einer Wärmemittelpumpe zum Fördern eines Wärmemittels, insbesondere Wasser, in dem Wärmemittelkreislauf zur Kühlung und/oder Erwärmung einer Batterie und/oder einer Leistungselektronik und/oder eines Ladegeräts und/oder einer anderen Komponente, insbesondere eines Stators, des elektrischen Antriebsmotors des Fahrzeugs und/oder eines Innenraums des Fahrzeugs, insbesondere durch einen Wärmetauscher, und
einen Wärmeübertrager zum Austausch von Wärme zwischen dem Kühlmittel in dem Kühlmittelkreislauf und dem Wärmemittel in dem Wärmemittelkreislauf.

Hierdurch kann in einer Ausführung die mittels des Kühlmittels von der Bremse und/oder von der Komponente des elektrischen Antriebsmotors und/oder von dem Getriebe aufgenommene bzw. abgeführte Wärme durch den Wärmeübertrager auf das Wärmemittel und von diesem insbesondere auf die Batterie und/oder in den Innenraum des Fahrzeugs übertragen werden. Auf diese Weise kann in einer Ausführung auf ein separates Heizelement wie etwa ein PCT-Heizelement, welches typischerweise in einer Klimaanlage des Fahrzeugs verbaut ist, zur Erwärmung des Innenraums, und/oder ein weiteres separates Heizelement, beispielsweise ebenfalls ein PCT-Heizelement, welches typischerweise zur Temperierung der Batterie verwendet wird, verzichtet werden.

Nach einer Ausführung weist das Thermomanagementsystem ferner zumindest eine Temperaturerfassungseinheit, die dazu eingerichtet ist, eine Innenraumtemperatur des Innenraums des Fahrzeugs und/oder eine Batterietemperatur der Batterie zu erfassen, zumindest ein Mehrwegeventil, durch welches eine Menge zu der Batterie geförderten Wärmemittels und/oder eine Menge zu der Leistungselektronik geförderten Wärmemittels und/oder eine Menge zu dem Ladegerät geförderten Wärmemittels und/oder eine Menge zu der anderen Komponente des elektrischen Antriebsmotors des Fahrzeugs geförderten Wärmemittels und/oder eine Menge zu dem Wärmetauscher geförderten Wärmemittels einstellbar ist, und eine Steuereinheit auf, die dazu eingerichtet ist, das zumindest eine Mehrwegeventil derart anzusteuern, dass das Wärmemittel zu der Batterie gefördert wird, wenn die Batterietemperatur kleiner als ein vorgegebener Batterietemperaturschwellenwert ist, und/oder das zumindest eine Mehrwegeventil derart anzusteuern, dass das Wärmemittel zu dem Wärmetauscher gefördert wird, wenn die Innenraumtemperatur kleiner als ein vorgegebener Innenraumtemperaturschwellenwert ist.

Hierdurch kann in einer Ausführung die Batterie, falls die Batterietemperatur unter dem für den sicheren Betrieb der Batterie erforderlichen (unteren) Batterietemperaturschwellenwert liegt, durch Verwendung der auf das Wärmemittel übertragenen Wärme aufgeheizt werden. Zusätzlich oder alternativ kann hierdurch in einer Ausführung der Innenraum des Fahrzeugs, falls die Innenraumtemperatur unter einem vorgegebenen, beispielsweise mittels der Klimaanlage einstellbaren (unteren) Innenraumtemperaturschwellenwert liegt, durch Verwendung der auf das Wärmemittel übertragenen Wärme aufgeheizt werden.

Nach einer Ausführung ist die Steuereinheit dazu eingerichtet, bei einem Bremsvorgang des Fahrzeugs die Bremse anzusteuern, um das Fahrzeug durch Betätigung der Bremse abzubremsen, wenn die Batterietemperatur kleiner als der vorgegebene Batterietemperaturschwellenwert ist und/oder die Innenraumtemperatur kleiner als der vorgegebene Innenraumtemperaturschwellenwert ist.

Hierbei ist die Steuereinheit vorzugsweise ferner dazu eingerichtet, die Kühlmittelpumpe während des Bremsvorgangs derart anzusteuern, dass diese das Kühlmittel in dem Kühlmittelkreislauf fördert, um die Wärme von der Bremse und/oder der Komponente des elektrischen Antriebsmotors des Fahrzeugs und/oder des Getriebes des Fahrzeugs auf verbesserte Weise abzuführen, und die zumindest eine Wärmemittelpumpe derart anzusteuern, dass diese das Wärmemittel während des Bremsvorgangs fördert, um eine Übertragung der Wärme von dem Kühlmittel auf das Wärmemittel zu gewährleisten.

Hierbei kann in einer Ausführung die während des Bremsvorgangs in der Bremse generierte Wärme abgeführt und zur Erwärmung der Batterie und/oder des Innenraums genutzt werden.

Nach einer Ausführung ist der elektrische Antriebsmotor in einem Elektromotormodus, in dem das Fahrzeug angetrieben wird oder in dem sich der elektrische Antriebsmotor in einem Leerlaufbetrieb befindet, und in einem Generatormodus, in welchem Energie rekuperiert und in die Batterie rückgespeist wird, einstellbar durch die Steuereinheit, betreibbar, und ist die Steuereinheit dazu eingerichtet, bei dem Bremsvorgang des Fahrzeugs die Bremse anzusteuern, um das Fahrzeug durch Betätigung der Bremse abzubremsen, und den Elektromotormodus des elektrischen Antriebsmotors einzustellen, wenn die Batterietemperatur kleiner als der vorgegebene (untere) Batterietemperaturschwellenwert ist und/oder die Innenraumtemperatur kleiner als der vorgegebene (untere) Innenraumtemperaturschwellenwert ist.

Hierdurch kann beispielsweise im Falle eines Kaltstarts des Fahrzeugs, wenn die Batterietemperatur und/oder die Innenraumtemperatur niedrig ist, in einer Ausführung im Wesentlichen die gesamte für den Bremsvorgang durch das Fahrzeug aufzuwendende Energie zur Erwärmung der Batterie und/oder des Innenraums genutzt werden.

Nach einer Ausführung ist die zumindest eine Temperaturerfassungseinheit ferner dazu eingerichtet, eine Wärmemitteltemperatur des Wärmemittels zu erfassen, ist die Steuereinheit dazu eingerichtet, eine erforderliche Wärmeleistung zum Erwärmen der Batterie und/oder des Innenraums des Fahrzeugs zu ermitteln, eine Stellung eines Gaspedals des Fahrzeugs zu erfassen, anhand der Stellung des Gaspedals eine Drehmomentanforderung an den elektrischen Antriebsmotor zu bestimmen, die Bremse derart anzusteuern, dass diese einen Bremsvorgang mit einem vorgegebenen, basierend auf der erforderlichen Wärmeleistung berechneten, Bremsmoment durchführt, und den elektrischen Antriebsmotor derart anzusteuern, dass dieser ein Drehmoment erzeugt, welches auf der Drehmomentanforderung und dem Bremsmoment basiert, wenn die Wärmemitteltemperatur kleiner als ein vorgegebener Wärmemitteltemperaturschwellenwert ist.

Hierbei kann das basierend auf der erforderlichen Wärmeleistung berechnete Bremsmoment in Abhängigkeit von einer aktuellen Drehzahl eines Rads des Fahrzeugs berechnet werden, das berechnete Bremsmoment durch die Übersetzung des Getriebes dividiert und mit der anhand der Stellung des Gaspedals bestimmten Drehmomentanforderung des Fahrers zusammenaddiert werden, um das Drehmoment zu erhalten, welches durch den elektrischen Antriebsmotor erzeugt werden soll. Wenn das Fahrzeug mehrere der Bremsen, insbesondere Lamellenbremsen aufweist, kann das berechnete Bremsmoment durch die Anzahl der Bremsen dividiert und das Ergebnis in jeder der Bremsen realisiert werden. Wenn beispielsweise eine Bremse an einem Rad auf der linken Seite des Fahrzeugs und eine Bremse an einem Rad der rechten Seite des Fahrzeugs vorgesehen sind, wird das berechnete Bremsmoment in jeder der beiden Bremsen zur Hälfte realisiert.

Weiterhin kann hierbei die Steuereinheit insbesondere dazu eingerichtet sein, den elektrischen Antriebsmotor derart anzusteuern, dass dieser ein Drehmoment erzeugt, welches gleich der Summe aus der Drehmomentanforderung und dem Bremsmoment ist, wenn die Wärmemitteltemperatur kleiner als ein vorgegebener Wärmemitteltemperaturschwellenwert ist.

Hierdurch kann in einer Ausführung selbst in dem Falle, in dem das Fahrzeug bzw. dessen Geschwindigkeit nicht abgebremst wird, durch das aktive Bremsen mit der Bremse Wärme von dieser abgeführt werden und zur Erwärmung der Batterie und/oder des Innenraums genutzt werden.

Nach einer Ausführung ist die Steuereinheit dazu eingerichtet, eine aktuelle Bremsleistung der Bremse zu ermitteln, und eine Fördermenge des Kühlmittels durch die Kühlmittelpumpe in Abhängigkeit von der aktuellen Bremsleistung einzustellen.

Hierdurch kann in einer Ausführung beispielsweise durch Erhöhung der Fördermenge bei erhöhter Bremsleistung die Wärmeabfuhr durch das Kühlmittel verbessert und gleichzeitig die Bremse vor einer Überhitzung geschützt werden.

Nach einer Ausführung weist das Thermomanagementsystem ferner einen Eingangstemperatursensor, welcher dazu eingerichtet ist, eine Eingangstemperatur des Kühlmittels stromaufwärts der Bremse zu erfassen, und einen Ausgangstemperatursensor auf, welcher dazu eingerichtet ist, eine Ausgangstemperatur des Kühlmittels stromabwärts der Bremse zu erfassen, wobei die Steuereinheit dazu eingerichtet ist, wenn eine Differenz zwischen der Ausgangstemperatur und der Eingangstemperatur einen vorgegebenen Differenztemperaturschwellenwert überschreitet, die Fördermenge des Kühlmittels durch die Kühlmittelpumpe in Abhängigkeit von der aktuellen Bremsleistung und einer Differenz zwischen der Differenz zwischen der Ausgangstemperatur und der Eingangstemperatur und dem vorgegebenen Differenztemperaturschwellenwert einzustellen.

Hierdurch kann in einer Ausführung insbesondere die Fördermenge des Kühlmittels erhöht werden, wenn die Differenz zwischen der Ausgangstemperatur und der Eingangstemperatur den vorgegebenen Differenztemperaturschwellenwert überschreitet, um die Überhitzung der Bremse zu verhindern.

Nach einer Ausführung weist das Thermomanagementsystem ferner einen weiteren Wärmetauscher zur Abgabe von Wärme an eine Umgebung des Fahrzeugs auf, wobei durch das zumindest eine Mehrwegeventil eine Menge zu dem weiteren Wärmetauscher geförderten Wärmemittels einstellbar ist, und die Steuereinheit dazu eingerichtet ist, wenn die Wärmemitteltemperatur größer als der vorgegebene Wärmemitteltemperaturschwellenwert ist, das zumindest eine Mehrwegeventil derart anzusteuern, dass das Wärmemittel zu dem weiteren Wärmetauscher gefördert wird, und bei dem Bremsvorgang den Generatormodus des elektrischen Antriebsmotors einzustellen.

Hierdurch kann in einer Ausführung beispielsweise in einem Fall, in dem die Batterie und/oder der Innenraum nicht geheizt werden müssen, die während des Bremsvorgangs in der Bremse generierte Wärme über den weiteren Wärmetauscher an die Umgebung des Fahrzeugs abgegeben werden.

Des Weiteren kann durch die Einstellung des Generatormodus des elektrischen Antriebsmotors während dem Bremsvorgang bewirkt werden, dass die Bremse für den Bremsvorgang nicht oder nur in geringem Maße betätigt werden muss, da die Bremswirkung des Generatormodus bzw. das Bremsmoment, das durch den Generatormodus hervorgerufen wird, hierfür ausreicht oder zu der Bremswirkung der Bremse addiert wird, und somit eine weitere Erhöhung der Wärmemitteltemperatur weitestgehend vermieden wird, während gleichzeitig Energie mittels des Generatormodus rückgewonnen werden kann.

Nach einer Ausführung ist die Steuereinheit dazu eingerichtet, die Bremse anzusteuern, um das Fahrzeug durch Betätigung der Bremse zusätzlich abzubremsen, wenn die Wärmemitteltemperatur größer als der vorgegebene Wärmemitteltemperaturschwellenwert ist, und ein für den Bremsvorgang gefordertes Bremsmoment größer als ein durch den Generatormodus während des Bremsvorgangs erzeugbares Bremsmoment ist.

Hierdurch kann in einer Ausführung der Bremsvorgang mit dem erforderlichen Bremsmoment durchgeführt werden, insbesondere auch dann, wenn das für den Bremsvorgang geforderte Bremsmoment durch den Generatormodus nicht erzeugt werden kann oder nicht dauerhaft erzeugt werden kann, wie beispielsweise bei einer längeren Bergabfahrt des Fahrzeugs, da hierdurch der elektrische Antriebsmotor überhitzt werden würde.

Nach einer Ausführung weist das Thermomanagementsystem ferner ein Kühlmittelkreislauf-Mehrwegeventil, durch welches ein Verhältnis zwischen einer zur Kühlung der Bremse verwendeten Kühlmittelmenge und einer zur Kühlung der Komponente und/oder des Getriebes verwendeten Kühlmittelmenge einstellbar ist, und zumindest eine Temperaturerfassungseinrichtung zur Erfassung einer Temperatur der Komponente und/oder einer Temperatur des Getriebes auf, wobei die Steuereinheit dazu eingerichtet ist, die Fördermenge des Kühlmittels durch die Kühlmittelpumpe zusätzlich in Abhängigkeit von der Temperatur der Komponente und/oder der Temperatur des Getriebes einzustellen, und das Verhältnis zwischen der zur Kühlung der Bremse verwendeten Kühlmittelmenge und der zur Kühlung der Komponente und/oder des Getriebes verwendeten Kühlmittelmenge basierend auf der Temperatur der Komponente und/oder der Temperatur des Getriebes und der Differenz zwischen der Differenz zwischen der Ausgangstemperatur und der Eingangstemperatur und dem vorgegebenen Differenztemperaturschwellenwert einzustellen.

Hierdurch können in einer Ausführung die für die Kühlung der Bremse und die für die Kühlung der Komponente und/oder die für die Kühlung des Getriebes verwendeten Kühlmittelmengen/-flüsse individuell bedarfsgerecht eingestellt werden.

Nach einer Ausführung weist das Thermomanagementsystem ferner auf:
einen Kühlkreislauf mit einem Verdampfer zur Kühlung des Innenraums des Fahrzeugs, einem Kondensator und einem Kompressor zum Fördern eines weiteren Wärmemittels in dem Kühlkreislauf, und
einen weiteren Wärmeübertrager zum Austausch von Wärme zwischen dem Wärmemittel in dem Wärmemittelkreislauf und dem weiteren Wärmemittel in dem Kühlkreislauf.

Hierbei kann der Kühlkreislauf insbesondere durch den Kältekreislauf der Klimaanlage des Fahrzeugs gebildet sein, wobei Wärme von der Batterie über das Wärmemittel und den weiteren Wärmeüberträger an das weitere Wärmemittel übertragen werden kann, um die Batterie zu kühlen, falls die Batterietemperatur größer als ein vorgegebener oberer Batterieschwellenwert ist.

Nach einem anderen Aspekt der Erfindung weist ein Fahrzeug, insbesondere Kraftfahrzeug, ein vorstehend beschriebenes Thermomanagementsystem auf.

Weitere Vorteile und Merkmale ergeben sich aus den Unteransprüchen und den Ausführungsbeispielen. Hierzu zeigt, teilweise schematisiert:
- Fig. 1: ein Fahrzeug mit einem Thermomanagementsystem nach einer Ausführung der Erfindung, und
- Fig. 2: ein Thermomanagementsystem nach einer Ausführung der Erfindung.

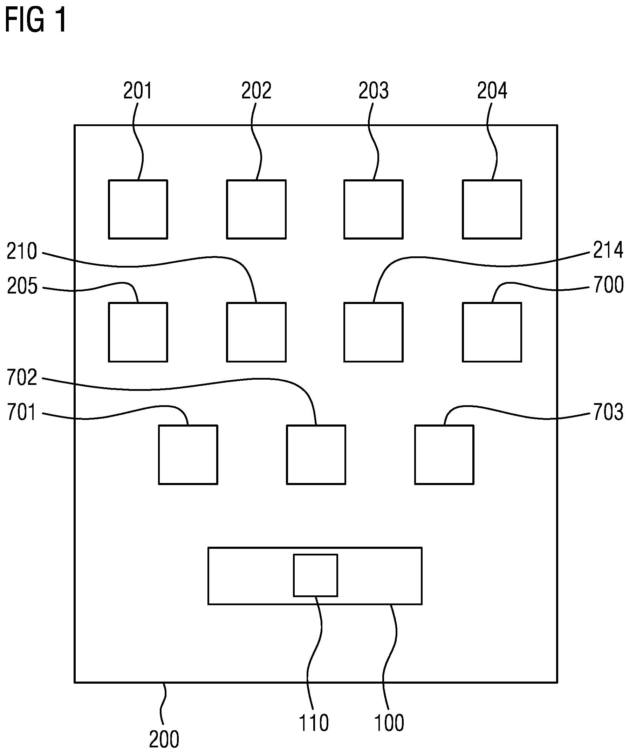

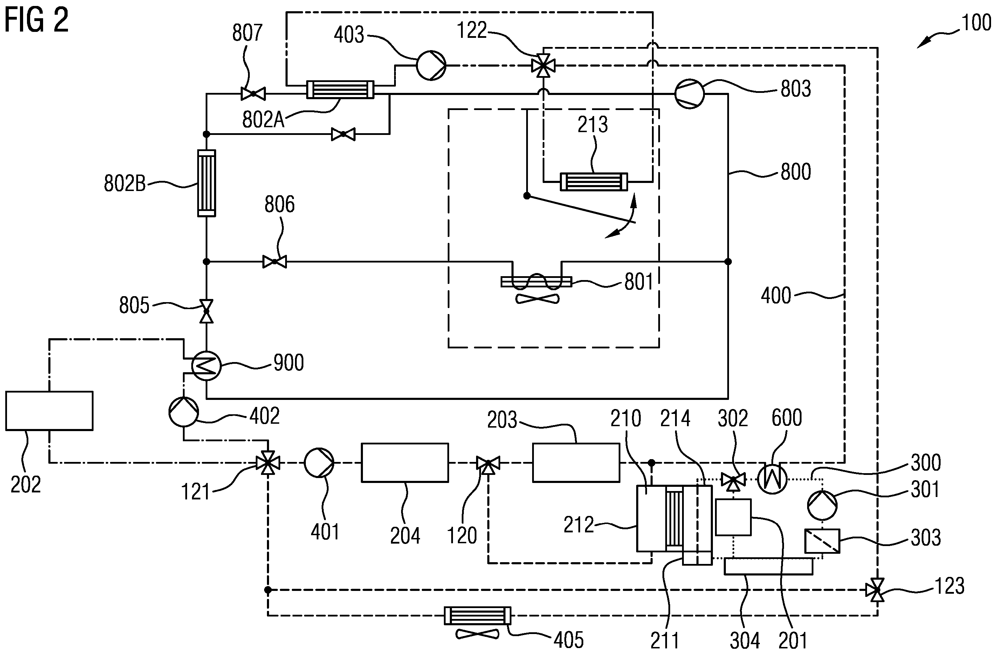

Fig. 1 zeigt ein Fahrzeug mit einem Thermomanagementsystem nach einer Ausführung der Erfindung, und Fig. 2 zeigt Details des in Fig. 1 gezeigten Thermomanagementsystems.

Das Fahrzeug 200, insbesondere Elektro-, Hybrid- oder Wasserstofffahrzeug, weist ein Thermomanagementsystem 100 mit einer Steuereinheit 110, eine Bremse 201, insbesondere Lamellenbremse zum Abbremsen des Fahrzeugs 200, eine Batterie 202, eine Leistungselektronik 203, insbesondere einen Inverter, ein Ladegerät 204 zum Aufladen der Batterie 202, ein Gaspedal 205, einen elektrischen Antriebsmotor 210 mit einer Komponente 211, insbesondere einem Rotor, und einer anderen Komponente 212, insbesondere einem Stator, ein Getriebe 214, insbesondere Reduktionsgetriebe zur Koppelung des Rotors 211 mit einer nicht gezeigten, mit den Rädern des Fahrzeugs 200 gekoppelten Antriebswelle des Fahrzeugs 200, zumindest eine Temperaturerfassungseinheit 700, einen Eingangstemperatursensor 701, einen Ausgangstemperatursensor 702, und zumindest eine Temperaturerfassungseinrichtung 703 auf.

Das Thermomanagementsystem 100 weist einen Kühlmittelkreislauf 300 mit einer Kühlmittelpumpe 301 zum Fördern eines Kühlmittels, insbesondere Öl, in dem Kühlmittelkreislauf 300 zur Kühlung und/oder Schmierung der Bremse 201 und/oder der Komponente 211 des elektrischen Antriebsmotors 210 des Fahrzeugs 200 und/oder des Getriebes 214 des Fahrzeugs 200, einem Filter 303, insbesondere Ölfilter zum Filtern des Kühlmittels und einem Sumpf 304, insbesondere Ölsumpf, für das Kühlmittel auf.

Des Weiteren weist das Thermomanagementsystem 100 einen Wärmemittelkreislauf 400 mit zumindest einer Wärmemittelpumpe 401, 402, 403 zum Fördern eines Wärmemittels, insbesondere Wasser, in dem Wärmemittelkreislauf 400 zur Kühlung und/oder Erwärmung der Batterie 202 und/oder der Leistungselektronik 203 und/oder des Ladegeräts 204 und/oder der anderen Komponente 212 des elektrischen Antriebsmotors 210 des Fahrzeugs 200 und/oder eines Innenraums des Fahrzeugs 200, insbesondere durch einen Wärmetauscher 213, und einen Wärmeübertrager 600 zum Austausch von Wärme zwischen dem Kühlmittel in dem Kühlmittelkreislauf 300 und dem Wärmemittel in dem Wärmemittelkreislauf 400 auf.

Hierbei ist die zumindest eine Temperaturerfassungseinheit 700 dazu eingerichtet, eine Innenraumtemperatur des Innenraums des Fahrzeugs 200 und/oder eine Batterietemperatur der Batterie 202 zu erfassen, wobei durch ein Mehrwegeventil 121 eine Menge zu der Batterie 202 geförderten Wärmemittels einstellbar ist, durch ein Mehrwegeventil 120 eine Menge zu der Leistungselektronik 203 geförderten Wärmemittels und eine Menge zu der anderen Komponente 212 des elektrischen Antriebsmotors 210 des Fahrzeugs 200 geförderten Wärmemittels einstellbar ist, und durch ein Mehrwegeventil 122 eine Menge zu dem Wärmetauscher 213 geförderten Wärmemittels einstellbar ist.

Die Steuereinheit 110 ist dazu eingerichtet, das Mehrwegeventil 121 derart anzusteuern, dass das Wärmemittel zu der Batterie 202 gefördert wird, wenn die Batterietemperatur kleiner als ein vorgegebener Batterietemperaturschwellenwert ist, und/oder das Mehrwegeventil 122 derart anzusteuern, dass das Wärmemittel zu dem Wärmetauscher 213 gefördert wird, wenn die Innenraumtemperatur kleiner als ein vorgegebener Innenraumtemperaturschwellenwert ist.

Hierbei ist die Steuereinheit 110 insbesondere dazu eingerichtet, bei einem Bremsvorgang des Fahrzeugs 200 die Bremse 201 anzusteuern, um das Fahrzeug 200 durch Betätigung der Bremse 201 abzubremsen, wenn die Batterietemperatur kleiner als der vorgegebene Batterietemperaturschwellenwert ist und/oder die Innenraumtemperatur kleiner als der vorgegebene Innenraumtemperaturschwellenwert ist.

Der elektrische Antriebsmotor 210 ist in einem Elektromotormodus, in dem das Fahrzeug 200 angetrieben wird oder sich der elektrische Antriebsmotor 210 in einem Leerlauf befindet, und in einem Generatormodus, in dem Energie durch Rekuperation zurückgewonnen wird und die rekuperierte Energie in die Batterie 202 rückgespeist wird, einstellbar durch die Steuereinheit 110, betreibbar. Hierbei ist die Steuereinheit 110 dazu eingerichtet, bei dem Bremsvorgang des Fahrzeugs 200 die Bremse 201 anzusteuern, um das Fahrzeug 200 durch Betätigung der Bremse 201 abzubremsen, und den Elektromotormodus des elektrischen Antriebsmotors 210 einzustellen, wenn die Batterietemperatur kleiner als der vorgegebene Batterietemperaturschwellenwert ist und/oder die Innenraumtemperatur kleiner als der vorgegebene Innenraumtemperaturschwellenwert ist.

Die zumindest eine Temperaturerfassungseinheit 700 ist ferner dazu eingerichtet, eine Wärmemitteltemperatur des Wärmemittels zu erfassen, wobei die Steuereinheit 110 dazu eingerichtet ist, eine erforderliche Wärmeleistung zum Erwärmen der Batterie 202 und/oder des Innenraums des Fahrzeugs 200 zu ermitteln, eine Stellung des Gaspedals 205 des Fahrzeugs 200 zu erfassen, anhand der Stellung des Gaspedals 205 eine von dem Fahrer gewünschte Drehmomentanforderung an den elektrischen Antriebsmotor 210 zu bestimmen, die Bremse 201 derart anzusteuern, dass diese einen Bremsvorgang mit einem vorgegebenen, basierend auf der erforderlichen Wärmeleistung berechneten, Bremsmoment durchführt, und den elektrischen Antriebsmotor 210 derart anzusteuern, dass dieser ein Drehmoment erzeugt, welches auf der Drehmomentanforderung und dem Bremsmoment basiert, wenn die Wärmemitteltemperatur kleiner als ein vorgegebener Wärmemitteltemperaturschwellenwert ist.

Hierbei kann das basierend auf der erforderlichen Wärmeleistung berechnete Bremsmoment in Abhängigkeit von einer aktuellen Drehzahl eines Rads des Fahrzeugs 200 berechnet werden, das berechnete Bremsmoment durch die Übersetzung des Getriebes 214 dividiert und mit der anhand der Stellung des Gaspedals 205 bestimmten Drehmomentanforderung des Fahrers zusammenaddiert werden, um das Drehmoment zu erhalten, welches durch den elektrischen Antriebsmotor 210 erzeugt werden soll. Wenn das Fahrzeug 200 mehrere der Bremsen 201, insbesondere Lamellenbremsen, aufweist, kann das berechnete Bremsmoment durch die Anzahl der Bremsen 201 dividiert und das Ergebnis in jeder der Bremsen 201 realisiert werden. Wenn beispielsweise eine Bremse 201 an einem Rad auf der linken Seite des Fahrzeugs 200 und eine Bremse an einem Rad der rechten Seite des Fahrzeugs 200 vorgesehen sind, wird das berechnete Bremsmoment in jeder der beiden Bremsen 201 zur Hälfte realisiert.

Die Steuereinheit 110 ist insbesondere dazu eingerichtet, eine aktuelle Bremsleistung der Bremse 201 zu ermitteln, und eine Fördermenge des Kühlmittels durch die Kühlmittelpumpe 301 in Abhängigkeit von der aktuellen Bremsleistung einzustellen.

Der Eingangstemperatursensor 701 ist dazu eingerichtet, eine Eingangstemperatur des Kühlmittels stromaufwärts der Bremse 201 zu erfassen, und der Ausgangstemperatursensor 702 ist dazu eingerichtet, eine Ausgangstemperatur des Kühlmittels stromabwärts der Bremse 201 zu erfassen. Die Steuereinheit 110 ist dazu eingerichtet, wenn eine Differenz zwischen der Ausgangstemperatur und der Eingangstemperatur einen vorgegebenen Differenztemperaturschwellenwert überschreitet, die Fördermenge des Kühlmittels durch die Kühlmittelpumpe 301 in Abhängigkeit von der aktuellen Bremsleistung und einer Differenz zwischen der Differenz zwischen der Ausgangstemperatur und der Eingangstemperatur und dem vorgegebenen Differenztemperaturschwellenwert einzustellen.

Das Thermomanagementsystem 100 weist ferner einen weiteren Wärmetauscher 405, insbesondere Radiator, zur Abgabe von Wärme an eine Umgebung des Fahrzeugs 200 auf, wobei durch das Mehrwegeventil 123 eine Menge zu dem weiteren Wärmetauscher 405 geförderten Wärmemittels einstellbar ist. Hierbei ist die Steuereinheit 110 dazu eingerichtet, wenn die Wärmemitteltemperatur größer als der vorgegebene Wärmemitteltemperaturschwellenwert ist, das Mehrwegeventil 123 derart anzusteuern, dass das Wärmemittel zu dem weiteren Wärmetauscher 405 gefördert wird, und bei dem Bremsvorgang den Generatormodus des elektrischen Antriebsmotors 210 einzustellen.

Die Steuereinheit 110 ist insbesondere dazu eingerichtet, die Bremse 201 anzusteuern, um das Fahrzeug 200 durch Betätigung der Bremse 201 zusätzlich, neben der Abbremsung durch Betreiben des elektrischen Antriebsmotors 210 in dem Generatormodus, abzubremsen, wenn die Wärmemitteltemperatur größer als der vorgegebene Wärmemitteltemperaturschwellenwert ist und ein für den Bremsvorgang gefordertes Bremsmoment größer als ein durch den Generatormodus während des Bremsvorgangs erzeugbares Bremsmoment oder ein Bremsmoment ist, welches bei dauerhafter Erzeugung durch den Generatormodus zu einer Überhitzung des elektrischen Antriebsmotors 210 führen würde.

Das Thermomanagementsystem 100 weist ferner ein Kühlmittelkreislauf-Mehrwegeventil 302 auf, durch welches ein Verhältnis zwischen einer zur Kühlung der Bremse 201 verwendeten Kühlmittelmenge und einer zur Kühlung der Komponente 211 und/oder des Getriebes 214 verwendeten Kühlmittelmenge einstellbar ist, wobei die zumindest eine Temperaturerfassungseinrichtung 703 dazu eingerichtet ist, eine Temperatur der Komponente 211 und/oder eine Temperatur des Getriebes 214 zu erfassen.

Hierbei ist die Steuereinheit 110 dazu eingerichtet, die Fördermenge des Kühlmittels durch die Kühlmittelpumpe 301 zusätzlich in Abhängigkeit von der Temperatur der Komponente 211 und/oder der Temperatur des Getriebes 214 einzustellen, und das Verhältnis zwischen der zur Kühlung der Bremse 201 verwendeten Kühlmittelmenge und der zur Kühlung der Komponente 211 und/oder des Getriebes 214 verwendeten Kühlmittelmenge basierend auf der Temperatur der Komponente 211 und/oder der Temperatur des Getriebes 214 und der Differenz zwischen der Differenz zwischen der Ausgangstemperatur und der Eingangstemperatur und dem vorgegebenen Differenztemperaturschwellenwert einzustellen.

Das Thermomanagementsystem 100 weist ferner einen Kühlkreislauf 800, insbesondere einer Klimaanlage des Fahrzeugs 200, mit einem Verdampfer 801 zur Kühlung des Innenraums des Fahrzeugs 200, Kondensatoren 802A, 802B, Expansionsventilen 805, 806 und 807, und einem Kompressor 803 zum Fördern eines weiteren Wärmemittels in dem Kühlkreislauf 800, und einen weiteren Wärmeübertrager 900 zum Austausch von Wärme zwischen dem Wärmemittel in dem Wärmemittelkreislauf 400 und dem weiteren Wärmemittel in dem Kühlkreislauf 800 auf.

Hierbei kann, wie in Fig. 2 veranschaulicht, das Wärmemittel des Wärmemittelkreislaufs 400 durch die Wärmemittelpumpe 403 ebenfalls zu dem Kondensator 802A gefördert werden.

### Bezugszeichenliste

- 100: Thermomanagementsystem
- 110: Steuereinheit
- 120, 121, 122: Mehrwegeventil
- 200: Fahrzeug
- 201: Bremse
- 202: Batterie
- 203: Leistungselektronik
- 204: Ladegerät
- 205: Gaspedal
- 210: elektrischer Antriebsmotor
- 211: eine Komponente des elektrischen Antriebsmotors
- 212: andere Komponente des elektrischen Antriebsmotors
- 213: Wärmetauscher
- 214: Getriebe
- 300: Kühlmittelkreislauf
- 301: Kühlmittelpumpe
- 302: Kühlmittelkreislauf-Mehrwegeventil
- 303: Ölfilter
- 304: Ölsumpf
- 400: Wärmemittelkreislauf
- 401, 402, 403: Wärmemittelpumpe
- 405: weiterer Wärmetauscher
- 600: Wärmeüberträger
- 700: Temperaturerfassungseinheit
- 701: Eingangstemperatursensor
- 702: Ausgangstemperatursensor
- 703: Temperaturerfassungseinrichtung
- 800: Kühlkreislauf
- 801: Verdampfer
- 802A, 802B: Kondensator
- 803: Kompressor
- 804, 805, 806, 807: Expansionsventil
- 900: weiterer Wärmeübertrager

## Patentansprüche

1. Thermomanagementsystem (100) für ein Fahrzeug (200), aufweisend:
einen Kühlmittelkreislauf (300) mit einer Kühlmittelpumpe (301) zum Fördern eines Kühlmittels in dem Kühlmittelkreislauf (300) zur Kühlung einer Bremse (201), insbesondere Lamellenbremse, und/oder einer Komponente (211) eines elektrischen Antriebsmotors (210) des Fahrzeugs (200) und/oder eines Getriebes (214), insbesondere Reduktionsgetriebes des Fahrzeugs (200),
einen Wärmemittelkreislauf (400) mit zumindest einer Wärmemittelpumpe (401, 402, 403) zum Fördern eines Wärmemittels in dem Wärmemittelkreislauf (400) zur Kühlung und/oder Erwärmung einer Batterie (202) und/oder einer Leistungselektronik (203) und/oder eines Ladegeräts (204) und/oder einer anderen Komponente (212) des elektrischen Antriebsmotors (210) des Fahrzeugs (200) und/oder eines Innenraums des Fahrzeugs (200), insbesondere durch einen Wärmetauscher (213), und
einen Wärmeübertrager (600) zum Austausch von Wärme zwischen dem Kühlmittel in dem Kühlmittelkreislauf (300) und dem Wärmemittel in dem Wärmemittelkreislauf (400).

2. Thermomanagementsystem (100) nach Anspruch 1, ferner aufweisend zumindest eine Temperaturerfassungseinheit (700), die dazu eingerichtet ist, eine Innenraumtemperatur des Innenraums des Fahrzeugs (200) und/oder eine Batterietemperatur der Batterie (202) zu erfassen, zumindest ein Mehrwegeventil (120, 121, 122), durch welches eine Menge zu der Batterie (202) geförderten Wärmemittels und/oder eine Menge zu der Leistungselektronik (203) geförderten Wärmemittels und/oder eine Menge zu dem Ladegerät (204) geförderten Wärmemittels und/oder eine Menge zu der anderen Komponente (212) des elektrischen Antriebsmotors (210) des Fahrzeugs (200) geförderten Wärmemittels und/oder eine Menge zu dem Wärmetauscher (213) geförderten Wärmemittels einstellbar ist, und eine Steuereinheit (110), die dazu eingerichtet ist, das zumindest eine Mehrwegeventil (121) derart anzusteuern, dass das Wärmemittel zu der Batterie (202) gefördert wird, wenn die Batterietemperatur kleiner als ein vorgegebener Batterietemperaturschwellenwert ist, und/oder das zumindest eine Mehrwegeventil (122) derart anzusteuern, dass das Wärmemittel zu dem Wärmetauscher (213) gefördert wird, wenn die Innenraumtemperatur kleiner als ein vorgegebener Innenraumtemperaturschwellenwert ist.

3. Thermomanagementsystem (100) nach Anspruch 2, bei dem die Steuereinheit (110) dazu eingerichtet ist, bei einem Bremsvorgang des Fahrzeugs (200) die Bremse (201) anzusteuern, um das Fahrzeug (200) durch Betätigung der Bremse (201) abzubremsen, wenn die Batterietemperatur kleiner als der vorgegebene Batterietemperaturschwellenwert ist und/oder die Innenraumtemperatur kleiner als der vorgegebene Innenraumtemperaturschwellenwert ist.

4. Thermomanagementsystem (100) nach Anspruch 3, bei dem der elektrische Antriebsmotor (210) in einem Elektromotormodus und in einem Generatormodus, einstellbar durch die Steuereinheit (110), betreibbar ist, und die Steuereinheit (110) dazu eingerichtet ist, bei dem Bremsvorgang des Fahrzeugs (200) die Bremse (201) anzusteuern, um das Fahrzeug (200) durch Betätigung der Bremse (201) abzubremsen, und den Elektromotormodus des elektrischen Antriebsmotors (210) einzustellen, wenn die Batterietemperatur kleiner als der vorgegebene Batterietemperaturschwellenwert ist und/oder die Innenraumtemperatur kleiner als der vorgegebene Innenraumtemperaturschwellenwert ist.

5. Thermomanagementsystem (100) nach Anspruch 4, bei dem die zumindest eine Temperaturerfassungseinheit (700) ferner dazu eingerichtet ist, eine Wärmemitteltemperatur des Wärmemittels zu erfassen, die Steuereinheit (110) dazu eingerichtet ist, eine erforderliche Wärmeleistung zum Erwärmen der Batterie (202) und/oder des Innenraums des Fahrzeugs (200) zu ermitteln, eine Stellung eines Gaspedals (205) des Fahrzeugs (200) zu erfassen, anhand der Stellung des Gaspedals (205) eine Drehmomentanforderung an den elektrischen Antriebsmotor (210) zu bestimmen, die Bremse (201) derart anzusteuern, dass diese einen Bremsvorgang mit einem vorgegebenen, basierend auf der erforderlichen Wärmeleistung berechneten, Bremsmoment durchführt, und den elektrischen Antriebsmotor (210) derart anzusteuern, dass dieser ein Drehmoment erzeugt, welches auf der Drehmomentanforderung und dem Bremsmoment basiert, wenn die Wärmemitteltemperatur kleiner als ein vorgegebener Wärmemitteltemperaturschwellenwert ist.

6. Thermomanagementsystem (100) nach Anspruch 5, bei dem die Steuereinheit (110) dazu eingerichtet ist, eine aktuelle Bremsleistung der Bremse (201) zu ermitteln, und eine Fördermenge des Kühlmittels durch die Kühlmittelpumpe (301) in Abhängigkeit von der aktuellen Bremsleistung einzustellen.

7. Thermomanagementsystem (100) nach Anspruch 6, ferner aufweisend einen Eingangstemperatursensor (701), welcher dazu eingerichtet ist, eine Eingangstemperatur des Kühlmittels stromaufwärts der Bremse (201) zu erfassen, und einen Ausgangstemperatursensor (702), welcher dazu eingerichtet ist, eine Ausgangstemperatur des Kühlmittels stromabwärts der Bremse (201) zu erfassen, wobei die Steuereinheit (110) dazu eingerichtet ist, wenn eine Differenz zwischen der Ausgangstemperatur und der Eingangstemperatur einen vorgegebenen Differenztemperaturschwellenwert überschreitet, die Fördermenge des Kühlmittels durch die Kühlmittelpumpe (301) in Abhängigkeit von der aktuellen Bremsleistung und einer Differenz zwischen der Differenz zwischen der Ausgangstemperatur und der Eingangstemperatur und dem vorgegebenen Differenztemperaturschwellenwert einzustellen.

8. Thermomanagementsystem (100) nach Anspruch 6 oder 7, ferner aufweisend einen weiteren Wärmetauscher (405) zur Abgabe von Wärme an eine Umgebung des Fahrzeugs (200), wobei durch das zumindest eine Mehrwegeventil (123) eine Menge zu dem weiteren Wärmetauscher (405) geförderten Wärmemittels einstellbar ist, und die Steuereinheit (110) dazu eingerichtet ist, wenn die Wärmemitteltemperatur größer als der vorgegebene Wärmemitteltemperaturschwellenwert ist, das zumindest eine Mehrwegeventil (123) derart anzusteuern, dass das Wärmemittel zu dem weiteren Wärmetauscher (405) gefördert wird, und bei dem Bremsvorgang den Generatormodus des elektrischen Antriebsmotors (210) einzustellen.

9. Thermomanagementsystem (100) nach Anspruch 8, bei dem die Steuereinheit (110) dazu eingerichtet ist, die Bremse (201) anzusteuern, um das Fahrzeug (200) durch Betätigung der Bremse (201) zusätzlich abzubremsen, wenn die Wärmemitteltemperatur größer als der vorgegebene Wärmemitteltemperaturschwellenwert ist und ein für den Bremsvorgang gefordertes Bremsmoment größer als ein durch den Generatormodus während des Bremsvorgangs erzeugbares Bremsmoment ist.

10. Thermomanagementsystem (100) nach einem der Ansprüche 6 bis 9, ferner aufweisend ein Kühlmittelkreislauf-Mehrwegeventil (302), durch welches ein Verhältnis zwischen einer zur Kühlung der Bremse (201) verwendeten Kühlmittelmenge und einer zur Kühlung der Komponente (211) und/oder des Getriebes (214) verwendeten Kühlmittelmenge einstellbar ist, und zumindest eine Temperaturerfassungseinrichtung (703) zur Erfassung einer Temperatur der Komponente (211) und/oder einer Temperatur des Getriebes (214), wobei die Steuereinheit (110) dazu eingerichtet ist, die Fördermenge des Kühlmittels durch die Kühlmittelpumpe (301) zusätzlich in Abhängigkeit von der Temperatur der Komponente (211) und/oder der Temperatur des Getriebes (214) einzustellen, und das Verhältnis zwischen der zur Kühlung der Bremse (201) verwendeten Kühlmittelmenge und der zur Kühlung der Komponente (211) und/oder des Getriebes (214) verwendeten Kühlmittelmenge basierend auf der Temperatur der Komponente (211) und/oder der Temperatur des Getriebes (214) und der Differenz zwischen der Differenz zwischen der Ausgangstemperatur und der Eingangstemperatur und dem vorgegebenen Differenztemperaturschwellenwert einzustellen.

11. Thermomanagementsystem (100) nach einem der vorstehenden Ansprüche, ferner aufweisend:
einen Kühlkreislauf (800) mit einem Verdampfer (801) zur Kühlung des Innenraums des Fahrzeugs (200), einem Kondensator (802A, 802B) und einem Kompressor (803) zum Fördern eines weiteren Wärmemittels in dem Kühlkreislauf (800), und
einen weiteren Wärmeübertrager (900) zum Austausch von Wärme zwischen dem Wärmemittel in dem Wärmemittelkreislauf (400) und dem weiteren Wärmemittel in dem Kühlkreislauf (800).

12. Fahrzeug (200), insbesondere Kraftfahrzeug, aufweisend ein Thermomanagementsystem (100) nach einem der vorstehenden Ansprüche.

## Claims

1. A thermal management system (100) for a vehicle (200), comprising:
a coolant circuit (300) comprising a coolant pump (301) for pumping a coolant in the coolant circuit (300) for cooling a brake (201), in particular a multi-disc brake, and/or a component (211) of an electric drive motor (210) of the vehicle (200) and/or a transmission (214), in particular a reduction gearing, of the vehicle (200),
a heating medium circuit (400) with at least one heating medium pump (401, 402, 403) for pumping a heating medium in the heating medium circuit (400) for cooling and/or heating a battery (202) and/or power electronics (203) and/or a charging device (204) and/or a further component (212) of the electric drive motor (210) of the vehicle (200) and/or an interior of the vehicle (200), in particular by means of a heat exchanger (213), and
a heat exchanger (600) for exchanging heat between the coolant in the coolant circuit (300) and the heating medium in the heating medium circuit (400).

2. The thermal management system (100) according to claim 1, further comprising at least one temperature detection unit (700) configured to detect an interior temperature of the interior of the vehicle (200) and/or a battery temperature of the battery (202), at least one multi-way valve (120, 121, 122) via which a quantity of heating medium pumped to the battery (202) and/or a quantity of heating medium pumped to the power electronics (203) and/or a quantity of heating medium pumped to the charging device (204) and/or a quantity of heating medium pumped to the further component (212) of the electric drive motor (210) of the vehicle (200) and/or a quantity of heating medium pumped to the heat exchanger (213) can be set, and a control unit (110) configured to control the at least one multi-way valve (121) such that the heating medium is pumped to the battery (202) if the battery temperature is less than a specified battery temperature threshold, and/or to control the at least one multi-way valve (122) such that the heating medium is pumped to the heat exchanger (213) if the interior temperature is less than a specified interior temperature threshold.

3. The thermal management system (100) according to claim 2, wherein the control unit (110) is configured to control the brake (201) during a braking process of the vehicle (200) in order to decelerate the vehicle (200) by actuating the brake (201) if the battery temperature is less than the specified battery temperature threshold and/or the interior temperature is less than the specified interior temperature threshold.

4. The thermal management system (100) according to claim 3, wherein the electric drive motor (210) can be operated in an electric motor mode and in a generator mode, which can be set by the control unit (110), and the control unit (110) is configured to control the brake (201) during the braking process of the vehicle (200) in order to decelerate the vehicle (200) by actuating the brake (201), and to set the electric motor mode of the electric drive motor (210) if the battery temperature is less than the specified battery temperature threshold and/or the interior temperature is less than the specified interior temperature threshold.

5. The thermal management system (100) according to claim 4, wherein the at least one temperature detection unit (700) is further configured to detect a heating medium temperature of the heating medium, the control unit (110) is configured to determine a required heat output for heating the battery (202) and/or the interior of the vehicle (200), to detect a position of an accelerator pedal (205) of the vehicle (200), to determine a torque requirement for the electric drive motor (210) based on the position of the accelerator pedal (205), to control the brake (201) such that it performs a braking process with a specified braking torque calculated on the basis of the required heat output, and to control the electric drive motor (210) such that it generates a torque which is based on the torque requirement and the braking torque if the heating medium temperature is less than a specified heating medium temperature threshold.

6. The thermal management system (100) according to claim 5, wherein the control unit (110) is configured to determine a current braking power of the brake (201) and to set a pumping quantity of coolant via the coolant pump (301) depending on the current braking power.

7. The thermal management system (100) according to claim 6, further comprising an input temperature sensor (701) which is configured to detect an input temperature of the coolant upstream of the brake (201), and an output temperature sensor (702) which is configured to detect an output temperature of the coolant downstream of the brake (201), wherein the control unit (110) is configured to set the pumping quantity of coolant via the coolant pump (301) depending on the current braking power and a difference between the difference between the output temperature and the input temperature and the specified temperature difference threshold if a difference between the output temperature and the input temperature exceeds a specified temperature difference threshold.

8. The thermal management system (100) according to claim 6 or 7, further comprising a further heat exchanger (405) for discharging heat to an environment of the vehicle (200), wherein a quantity of heating medium pumped to the further heat exchanger (405) can be set by means of the at least one multi-way valve (123), and the control unit (110) is configured to control the at least one multi-way valve (123) such that the heating medium is pumped to the further heat exchanger (405) if the heating medium temperature is greater than the specified heating medium temperature threshold, and to set the generator mode of the electric drive motor (210) during the braking process.

9. The thermal management system (100) according to claim 8, wherein the control unit (110) is configured to control the brake (201) in order to additionally decelerate the vehicle (200) by actuating the brake (201) if the heating medium temperature is greater than the specified heating medium temperature threshold and a braking torque required for the braking process is greater than a braking torque that can be generated by the generator mode during the braking process.

10. The thermal management system (100) according to any one of claims 6 to 9, further comprising a coolant circuit multi-way valve (302) via which a ratio between a coolant quantity used for cooling the brake (201) and a coolant quantity used for cooling the component (211) and/or the transmission (214) can be set, and at least one temperature detection device (703) for detecting a temperature of the component (211) and/or a temperature of the transmission (214), wherein the control unit (110) is configured to additionally set the coolant pumping quantity via the coolant pump (301) depending on the temperature of the component (211) and/or the temperature of the transmission (214), and to adjust the ratio between the coolant quantity used for cooling the brake (201) and the coolant quantity used for cooling the component (211) and/or the transmission (214) based on the temperature of the component (211) and/or the temperature of the transmission (214) and the difference between the difference between the output temperature and the input temperature and the specified temperature difference threshold.

11. The thermal management system (100) according to any one of the preceding claims, further comprising:
a cooling circuit (800) having an evaporator (801) for cooling the interior of the vehicle (200), a condenser (802A, 802B) and a compressor (803) for pumping a further heating medium in the cooling circuit (800), and
a further heat exchanger (900) for exchanging heat between the heating medium in the heating medium circuit (400) and the further heating medium in the cooling circuit (800).

12. A vehicle (200), in particular a motor vehicle, comprising a thermal management system (100) according to any one of the preceding claims.

## Revendications

1. Système de gestion thermique (100) pour un véhicule (200), présentant :
un circuit de fluide de refroidissement (300) comportant une pompe à fluide de refroidissement (301) pour acheminer un fluide de refroidissement dans le circuit de fluide refroidissement (300) pour refroidir un frein (201), en particulier un frein multidisque, et/ou un composant (211) d'un moteur d'entraînement électrique (210) du véhicule (200) et/ou une transmission (214), en particulier un réducteur de vitesse du véhicule (200),
un circuit de fluide caloporteur (400) comportant au moins une pompe à fluide caloporteur (401, 402, 403) pour acheminer un fluide caloporteur dans le circuit de fluide caloporteur (400) pour refroidir et/ou réchauffer une batterie (202) et/ou une électronique de puissance (203) et/ou un chargeur (204) et/ou un autre composant (212) du moteur d'entraînement électrique (210) du véhicule (200) et/ou un habitacle du véhicule (200), en particulier au moyen d'un échangeur de chaleur (213), et
un échangeur de chaleur (600) pour l'échange de chaleur entre le fluide de refroidissement dans le circuit de fluide de refroidissement (300) et le fluide caloporteur dans le circuit de fluide caloporteur (400).

2. Système de gestion thermique (100) selon la revendication 1, présentant en outre au moins une unité de détection de température (700) conçue pour détecter une température d'habitacle de l'habitacle du véhicule (200) et/ou une température de batterie de la batterie (202), au moins une vanne multivoies (120, 121, 122) permettant de régler une quantité de fluide caloporteur acheminé jusqu'à la batterie (202) et/ou une quantité de fluide caloporteur acheminé jusqu'à l'électronique de puissance (203) et/ou une quantité de fluide caloporteur acheminé jusqu'au chargeur (204) et/ou une quantité de fluide caloporteur acheminé jusqu'à l'autre composant (212) du moteur d'entraînement électrique (210) du véhicule (200) et/ou une quantité de fluide caloporteur acheminé jusqu'à l'échangeur de chaleur (213), et une unité de commande (110) conçue pour commander l'au moins une vanne multivoies (121), de façon à acheminer le fluide caloporteur vers la batterie (202) lorsque la température de batterie est inférieure à une valeur seuil de température de batterie prédéfinie, et/ou pour commander l'au moins une vanne multivoies (122) de façon à acheminer le fluide caloporteur jusqu'à l'échangeur de chaleur (213) lorsque la température d'habitacle est inférieure à une valeur seuil de température d'habitacle prédéfinie.

3. Système de gestion thermique (100) selon la revendication 2, dans lequel l'unité de commande (110) est conçue pour commander le frein (201) lors d'un processus de freinage du véhicule (200) afin de ralentir le véhicule (200) en actionnant le frein (201) lorsque la température de batterie est inférieure à la valeur seuil de température de batterie prédéfinie et/ou la température d'habitacle est inférieure à la valeur seuil de température d'habitacle prédéfinie.

4. Système de gestion thermique (100) selon la revendication 3, dans lequel le moteur d'entraînement électrique (210) peut fonctionner dans un mode moteur électrique et dans un mode générateur, réglables au moyen de l'unité de commande (110), et l'unité de commande (110) est conçue pour commander le frein (201) pendant le processus de freinage du véhicule (200) afin de ralentir le véhicule (200) en actionnant le frein (201), et pour régler le mode moteur électrique du moteur d'entraînement électrique (210) lorsque la température de batterie est inférieure à la valeur seuil de température de batterie prédéfinie et/ou la température d'habitacle est inférieure à la valeur seuil de température d'habitacle prédéfinie.

5. Système de gestion thermique (100) selon la revendication 4, dans lequel l'au moins une unité de détection de température (700) est en outre conçue pour détecter une température de fluide caloporteur du fluide caloporteur, l'unité de commande (110) est conçue pour déterminer une puissance thermique requise pour réchauffer la batterie (202) et/ou l'habitacle du véhicule (200), pour détecter une position d'une pédale d'accélérateur (205) du véhicule (200), pour déterminer une demande de couple au moteur d'entraînement électrique (210) en fonction de la position de la pédale d'accélérateur (205), pour commander le frein (201) de façon à effectuer un processus de freinage avec un couple de freinage prédéfini, calculé sur la base de la puissance thermique requise, et pour commander le moteur d'entraînement électrique (210) de façon à générer un couple qui est basé sur la demande de couple et sur le couple de freinage lorsque la température de fluide caloporteur est inférieure à une valeur seuil de température de fluide caloporteur prédéfinie.

6. Système de gestion thermique (100) selon la revendication 5, dans lequel l'unité de commande (110) est conçue pour déterminer une puissance de freinage actuelle du frein (201) et pour régler une quantité d'acheminement de fluide de refroidissement au moyen de la pompe à fluide de refroidissement (301) en fonction de la puissance de freinage actuelle.

7. Système de gestion thermique (100) selon la revendication 6, présentant en outre un capteur de température d'entrée (701) qui est conçu pour détecter une température d'entrée du fluide de refroidissement en amont du frein (201), et un capteur de température de sortie (702) qui est conçu pour détecter une température de sortie du fluide de refroidissement en aval du frein (201), dans lequel l'unité de commande (110) est conçue pour régler la quantité d'acheminement du fluide de refroidissement au moyen de la pompe à fluide de refroidissement (301) en fonction de la puissance de freinage actuelle et d'une différence entre la différence entre la température de sortie et la température d'entrée et la valeur seuil de différence de température prédéfinie lorsqu'une différence entre la température de sortie et la température d'entrée dépasse une valeur seuil de différence de température prédéfinie.

8. Système de gestion thermique (100) selon la revendication 6 ou 7, présentant en outre un autre échangeur de chaleur (405) pour évacuer la chaleur vers un environnement du véhicule (200), dans lequel une quantité de fluide caloporteur acheminé vers l'autre échangeur de chaleur (405) peut être réglée au moyen de l'au moins une vanne multivoies (123), et l'unité de commande (110) est conçue pour, lorsque la température de fluide caloporteur est supérieure à la valeur seuil de température de fluide caloporteur prédéfinie, commander l'au moins une vanne multivoies (123) de façon à acheminer le fluide caloporteur jusqu'à l'autre échangeur de chaleur (405) et, lors du processus de freinage, à régler le mode générateur du moteur d'entraînement électrique (210).

9. Système de gestion thermique (100) selon la revendication 8, dans lequel l'unité de commande (110) est conçue pour commander le frein (201) afin de ralentir davantage le véhicule (200) en actionnant le frein (201) lorsque la température de fluide caloporteur est supérieure à la valeur seuil de température de fluide caloporteur prédéfinie et lorsqu'un couple de freinage requis pour le processus de freinage est supérieur à un couple de freinage pouvant être généré par le mode générateur pendant le processus de freinage.

10. Système de gestion thermique (100) selon l'une des revendications 6 à 9, présentant en outre une vanne multivoies (302) de circuit de fluide de refroidissement permettant de régler le rapport entre une quantité de fluide de refroidissement utilisé pour le refroidissement du frein (201) et une quantité de fluide de refroidissement utilisé pour le refroidissement du composant (211) et/ou de la transmission (214), et au moins un dispositif de détection de température (703) pour détecter une température du composant (211) et/ou une température de la transmission (214), dans lequel l'unité de commande (110) est conçue pour régler en outre la quantité d'acheminement du fluide de refroidissement au moyen de la pompe à fluide de refroidissement (301) en fonction de la température du composant (211) et/ou de la température de la transmission (214), et le rapport entre la quantité de fluide de refroidissement utilisé pour refroidir le frein (201) et la quantité de fluide de refroidissement utilisé pour refroidir le composant (211) et/ou la transmission (214) en fonction de la température du composant (211) et/ou de la température de la transmission (214) et de la différence entre la différence entre la température de sortie et la température d'entrée et la valeur seuil de différence de température prédéfinie.

11. Système de gestion thermique (100) selon l'une quelconque des revendications précédentes, présentant en outre :
un circuit de fluide de refroidissement (800) comportant un évaporateur (801) pour refroidir l'habitacle du véhicule (200), un condenseur (802A, 802B) et un compresseur (803) pour acheminer un autre fluide caloporteur dans le circuit de fluide de refroidissement (800), et
un autre échangeur de chaleur (900) pour l'échange de chaleur entre le fluide caloporteur dans le circuit de fluide caloporteur (400) et l'autre fluide caloporteur dans le circuit de fluide de refroidissement (800).

12. Véhicule (200), en particulier véhicule automobile, présentant un système de gestion thermique (100) selon l'une quelconque des revendications précédentes.
